(19) Europäisches Patentamt / European Patent Office / Office européen des brevets

(11) **EP 3 728 676 B1**

(12) **EUROPEAN PATENT SPECIFICATION**

(45) Date of publication and mention
of the grant of the patent:
**12.06.2024   Bulletin 2024/24**

(21) Application number: **18833712.5**

(22) Date of filing: **11.12.2018**

(51) International Patent Classification (IPC):
*C21D 1/70* (2006.01)   *C09D 5/08* (2006.01)
*C09D 1/02* (2006.01)   *C09D 7/61* (2018.01)
*C21D 8/02* (2006.01)   *C22C 38/42* (2006.01)
*C22C 38/44* (2006.01)   *C22C 38/50* (2006.01)
*C22C 38/52* (2006.01)   *C22C 38/54* (2006.01)
*C22C 38/02* (2006.01)   *C09D 1/00* (2006.01)
*C09D 7/40* (2018.01)   *C22C 38/58* (2006.01)
*C22C 38/48* (2006.01)   *C22C 38/46* (2006.01)
*C21D 8/04* (2006.01)   *C22C 38/34* (2006.01)
*C22C 38/04* (2006.01)

(52) Cooperative Patent Classification (CPC):
**C22C 38/02; C09D 1/00; C09D 1/02; C09D 5/08;
C09D 5/084; C09D 7/61; C09D 7/69; C09D 7/70;
C21D 1/70; C21D 8/0215; C21D 8/0226;
C21D 8/0284; C21D 8/0484; C22C 38/04;
C22C 38/34;** (Cont.)

(86) International application number:
**PCT/IB2018/059869**

(87) International publication number:
**WO 2019/123104 (27.06.2019 Gazette 2019/26)**

(54) **A METHOD FOR COATING A STEEL SUBSTRATE WITH A SCALE PROTECTION**

VERFAHREN ZUR BESCHICHTUNG EINES STAHLSUBSTRATS MIT EINEM ZUNDERSCHUTZ

MÉTHODE DE REVÊTEMENT D'UN SUBSTRAT D'ACIER AVEC UNE PROTECTION CONTRE LA CALAMINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **19.12.2017   PCT/IB2017/058106**

(43) Date of publication of application:
**28.10.2020   Bulletin 2020/44**

(73) Proprietor: **ArcelorMittal
1160 Luxembourg (LU)**

(72) Inventors:
• **LALIENA IRANZO, Carlos
33011 Oviedo Asturias (ES)**

• **PÉREZ RODRÍGUEZ, Marcos
33800 Cangas Del Narcea, Asturias (ES)**

(74) Representative: **Lavoix
2, place d'Estienne d'Orves
75441 Paris Cedex 09 (FR)**

(56) References cited:
**EP-A1- 1 932 933      EP-A1- 3 235 883
CN-A- 1 510 089      CN-A- 101 696 328
JP-A- S 505 207      JP-A- H10 265 978
JP-A- 2000 319 758      JP-A- 2001 073 033
KR-A- 20170 071 678      US-A- 3 950 575
US-A- 3 957 673      US-B1- 6 576 336**

EP 3 728 676 B1

(52) Cooperative Patent Classification (CPC): (Cont.)
**C22C 38/42; C22C 38/44; C22C 38/46;
C22C 38/50;** C08K 3/042

**Description**

The present invention relates to a method for the manufacturing of a steel substrate coated with a coating including nanographite, having a specific lateral size, and a binder, and a method for the manufacture of a hot rolled steel product using said coated steel substrate. It is particularly well suited for steel industry.

In the steel route production, after the steel making step, the steel is casted in the continuous casting. Semi-products, such as slabs, billets or blooms, are thus obtained. Usually, the semi-products are reheated at high temperature in a reheating furnace to dissolve the precipitates formed during the continuous casting and to obtain a hot workability. They are then descaled and hot-rolled. However, during the reheating step, semi-products can have some problems such as oxidation in a form of scale or decarburization.

To overcome these problems, it is known to deposit a coating on the semi-products, the coating allowing a good protection during the reheating step.

The patent application CN101696328 discloses a protective coating for a surface of a steel piece in order to prevent the surface from oxidation and decarburization at high temperature and, improve hardness and abrasion resistance and ultimately increase the overall service life of the steel workpiece, for the case of oxidation and decarburization of a surface (substrate) of a steel workpiece at high temperature, and the surface oxidation decarburization under the oxidizing atmosphere during heat treatment, forging, hot rolling, roll forming heating, particularly for the case that the steel workpiece is easy to be oxidized and decarbonized at high temperature in a heat treatment, leading to reduction in carbon atoms and carbon content, and the change in the surface (substrate) microstructure results in a reduced hardness, a reduced abrasion resistance and a short overall service life.

In this patent, the coating has a composition of: graphite, water glass and surface penetrant, in which a volume ratio of the graphite to sodium silicate is 1: 3 to 1: 7, and the surface penetrant constitutes 0.05% to 0.15% by volume of the coating. However, there is no mention of the coating adhesion properties.

Steel compositions are also known from EP1932933, JP2001073033 and JP2000319758.

Thus, the purpose of the invention is to provide a method for the manufacturing of a steel substrate comprising a protection coating during the reheating that adheres well onto the steel, and to provide a method for the manufacturing of a hot rolled steel product using said coated steel substrate.

This is achieved by the methods defined in the appended claims. Without willing to be bound by any theory, it seems that a coating obtained by the method of claims 1 to 10 well adheres on the steel substrate so that the steel substrate is well protected. The inventors have found that not only the steel composition but also the nature of coating plays an important role on the coating adhesion. Indeed, if the coating does not adhere on the steel substrate, there is an important risk that the coating cracks and detaches exposing the steel substrate to among others oxidation and/or decarburization.

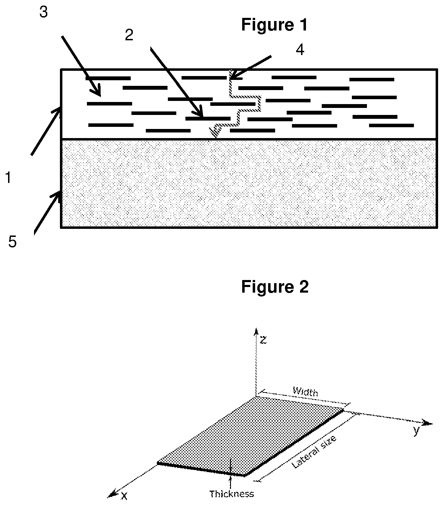

As illustrated in Figure 1, it is believed that in the coating (1) nanographite flake (2) having this specific lateral size are well dispersed into the binder (3) in a form of tortuous path (4). Thus, problems such as the oxidation and decarburization are avoided. Finally, it is believed that the use of nanographites having the lateral size between 1 and 60$\mu$m allows for a cluster including a large amount of nanographite flakes resulting in a narrower space between each nanographite particle. Thus, the tortuous path is more difficult to cross allowing for a high protection of the steel substrate (5).

Regarding the chemical composition of the steel, preferably, the C amount is between 0.31 and 1.0% by weight.

Preferably, the Mn amount is between 0.15 and 2.0% by weight, more preferably between 0.15 and 1.5% by weight and advantageously between 0.15 and 0.7% by weight.

Advantageously, the amount of Cr is below or equal to 0.3% by weight.

Preferably, the amount of Ni is below or equal to 0.1% by weight.

Advantageously, the amount of Mo is below or equal to 0.1%.

Figure 2 illustrates an example of nanographite according to the present invention. In this example, the lateral size means the highest length of the nanoplatelet through the X axis and the thickness means the height of the nanoplatelet through the Z axis. The width of the nanoplatelet is illustrated through the Y axis.

Preferably, the lateral size of the nanoparticles is between 20 and 55$\mu$m and more preferably between 30 and 55$\mu$m.

In the present invention, the thickness of the coating is between 10 and 250$\mu$m. For example, the thickness of the coating is between 10 and 100$\mu$m or between 100 and 250$\mu$m.

Preferably, the coating further comprises an organometallic compound. For example, the organometallic compound includes Dipropylene glycol monomethyl ether ($CH_3OC_3H_6OC_3H_6OH$), 1,2-Ethanediol ($HOCH_2CH_2OH$) and 2-ethylhexanoic acid, manganese salt ($C_8H_{16}MnO_2$). Indeed, without willing to be bound by any theory, it is believed that the organometallic compound allows for a fast curing of the coating avoiding a drying step at high temperature.

Advantageously, the steel substrate is a slab, a billet or a bloom.

The invention also relates to a method for the manufacture of the coated steel substrate according to claim 1, comprising the successive steps A), B) and C).

Preferably, in step B), the deposition of the coating is performed by spin coating, spray coating, dip coating or brush coating.

In step B), the aqueous mixture comprises from 1 to 60g/L of nanographite and from 150 to 250g/L of binder. Preferably, the aqueous mixture comprises from 1 to 35g/L of nanographite.

Preferably, in step B), wherein the aqueous mixture comprises nanographite comprising above 95% and advantageously 99% by weight of C.

Advantageously, in step B), the ratio in weight of nanographite with respect to binder is below or equal to 0.3.

Preferably, in step B), the aqueous mixture comprises an organometallic compound. More preferably, the concentration of the organometallic compound is equal or below to 0.12wt.%. Indeed, without willing to be bound by any theory, it is believed that this concentration allows for an optimized coating without any curing or with a curing at room temperature.

In a preferred embodiment, the coating is dried in a step C). Without willing to be bound by any theory, it is believed that the drying step allows for an improvement of the coating adhesion. Indeed, since water evaporates, the binder becomes tackier and more viscous leading to a hardened condition. In a preferred embodiment, in step C), the drying is performed at room temperature or at a temperature between 50 and 150°C and preferably between 80 and 120°C.

In another preferred embodiment, no drying step is performed.

Preferably, in step C), when a drying is applied, the drying step is performed with hot air.

Advantageously, in step C), when a drying is applied, the drying is performed during 5 to 60minutes and for example, between 15 and 45minutes.

The invention also relates to a method for manufacture of a hot rolled steel product comprising the following successive steps:

I. The provision of the coated steel substrate according to the present invention,
II. The reheating of the coated steel substrate in a reheating furnace at a temperature between 750 and 1300°C,
III. The descaling of the reheated coated steel sheet obtained in step II) and
IV. The hot-rolling of the descaled steel product.

Preferably, in step II), the reheating is performed at a temperature between 750 and 900°C or between 900 and 1300°C.

Preferably, in step III), the descaling is performed using water under pressure. For example, the water pressure is between 100 and 150 bars. In another embodiment, the descaling is performed mechanically, for example, by scratching or brushing the scale layer.

With the method according to the present invention, a hot rolled steel product having a high weight mass is obtained compared to the prior art.

For example, after the hot-rolling, the hot product can be coiled, cold-rolled, annealed in an annealing furnace and also coated with a metallic coating.

Finally, the invention relates to the use of a hot rolled steel product obtainable from the method according to the present invention for the manufacture of a part of an automotive vehicle, a rail, a wire or a spring.

The invention will now be explained in trials carried out for information only. They are not limiting.

Examples:

In Examples, steels substrates having the following steel composition in weight percent were used:

| Steel | C | Mn | Si | Cu | Cr | Ti | V | Mo | Ni |
|---|---|---|---|---|---|---|---|---|---|
| 1 | 0.798 | 1.310 | 0.446 | 0.014 | 0.097 | 0.0014 | 0.0026 | 0.0018 | 0.016 |
| 2 | 0.39 | 0.673 | 1.593 | 0.011 | 0.036 | 0.003 | 0.002 | 0.001 | 0.014 |
| 3 | 0.901 | 0.309 | 0.244 | 0.017 | 0.215 | 0.002 | 0.002 | 0.001 | 0.019 |

Trial 2 was casted in the form of slab and Trials 1 and 3 were casted in the form of billet.

Example 1: Adhesion test

In this test, different aqueous mixtures comprising nanographites and a binder were deposited on Steel 2. The aqueous mixture was sprayed on Steel 2. Then, the coating was dried during 30 minutes at 100°C. The suspension of the aqueous solution was evaluated by visual inspection and the coating adhesion was evaluated by optical microscopy to check the homogeneity in thickness and also in terms of coverage. Results are in the following Table 1:

| Aqueous mixtures | Aqueous mixture | | | Suspension | Coating adhesion |
|---|---|---|---|---|---|
| | Nanographite | Binder (200g/L) | Additive in the binder | | |
| 1* | Lateral size : 35-50$\mu$m, 30g/L | Na$_2$SiO$_3$ (sodium silicate) | - | High stability and sprayability | High adhesion (coverage 100%) |
| 2 | Lateral size : 35-50$\mu$m, 30g/L | Al$_2$(SO$_4$)$_3$ (aluminum sulfate) | - | High stability | No adhesion (coverage 0%) |
| 3 | Lateral size : 35-50$\mu$m, 30g/L | AlPO$_4$ (aluminum phosphate) | - | High stability | No adhesion (coverage 0%) |
| 4 | Lateral size : 35-50$\mu$m, 30g/L | Na$_2$SiO$_3$ | MgO (50g/L) | Low stability and good sprayability | High adhesion (%coverage: 100) |
| 5 | Lateral size : 35-50$\mu$m, 30g/L | Al$_2$(SO$_4$)$_3$ | MgO (50g/L) | Formation of slurry, high viscosity | No sprayability so not coating was obtained |
| 6* | Lateral size : 35-50$\mu$m, 30g/L | Al$_2$(SO$_4$)$_3$ | Al$_2$O$_3$ (50g/L) | High stability and sprayability | High adhesion (%coverage 100%) |
| 7 | Lateral size : 35-50$\mu$m, 30g/L | Al$_2$(SO$_4$)$_3$ | MgO (50g/L)+ Al$_2$O$_3$ (50g/L) | Formation of slurry, high viscosity | No sprayability so not coating was obtained |
| 8 | Lateral size : 35-50$\mu$m, 30g/L | AlPO$_4$ | MgO (50g/L) | Very Low stability | Bad adhesion (%coverage: 20) |
| 9 | Lateral size : 35-50$\mu$m, 30g/L | AlPO$_4$ | Al$_2$O$_3$ (50g/L) | Very Low stability | Bad adhesion (%coverage: 10) |
| 10 | Lateral size : 35-50$\mu$m, 30g/L | AlPO$_4$ | MgO (50g/L)+ Al$_2$O$_3$ (50g/L) | Very Low stability | Bad adhesion (%coverage: 15) |
| *: according to the present invention | | | | | |

Trials 1 and 6 according to the present invention have a high stability and sprayability, i.e. can easily be sprayed, and a high adhesion on the steel substrate.

Example 2: Oxidation test

For Trials 1, 3, 5 and 7, steels 2 and 3 were coated by spraying aqueous mixture 1 of Example 1 onto the steel. Then, the coating was dried during 30 minutes at 100°C.

Then, uncoated steels (Trials 2, 4, 6 and 8) and coated steels (Trials 1, 3, 5 and 7) were reheated at 800°C and 1000°C. After the reheating, all the trials were weighted. For each Trial, $\Delta$weight was determined by subtracting the weight after reheating from the weight before the reheating. The percentage of weight gain of the coated Trial was then calculated with the following formula:

$$\text{weight gain (\%)} = 100 - \left( \frac{\Delta \text{weight of coated trial} \times 100}{\Delta \text{weight of uncoated trial}} \right).$$

The results are in the following Table 2:

| Trials | Steels | Coating | Reheating step | | $\Delta$ Weight (g) | Weight gain (%) |
| --- | --- | --- | --- | --- | --- | --- |
| | | | temperature (°C) | time | | |
| 1* | 2 | Aqueous mixture 1 | 800 | 3h20min | 0.72 | 25 |
| 2 | 2 | - | 800 | 3h20min | 0.96 | |
| 3* | 2 | Aqueous mixture 1 | 1000 | 3h20min | 6.3 | 23 |
| 4 | 2 | - | 1000 | 3h20min | 8.2 | |
| 5* | 3 | Aqueous mixture 1 | 800 | 1h15min | 0.17 | 43 |
| 6 | 3 | - | 800 | 1h15min | 0.3 | |
| 7* | 3 | Aqueous mixture 1 | 1000 | 3h20min | 4.8 | 19 |
| 8 | 3 | - | 1000 | 3h20min | 5.9 | |
| *: according to the present invention. | | | | | | |

Trials according to the present invention show a significant increase of the percentage of weight gain. Indeed, the steel substrate having the specific steel composition according to the present invention is well protected with the aqueous mixture 1 during the reheating step.

Example 3: Decarburization test

For Trials 9, 10, 12, 13, 14, 15 and 17, steel 1 or 2 was coated by spraying Aqueous mixture 1 of Example 1 onto the steel. Then, optionally, the coating was dried at room temperature or during 30 minutes at 100°C.

Then, uncoated steels (Trials 11, 16 and 18) and coated steels (Trials 9, 10, 12, 13, 14, 15 and 17) were reheated at 1250°C. After the reheating, the trials were analyzed by optical microscopy (OM). 0 means that almost no decarburized areas are present at the trial surface, i.e. almost no decarburization happened, during the reheating and 1 means that a lot of decarburized areas are present at the surface of the trial.

The results are in the following Table 3:

| Trials | Steels | Coating | Curing after coating deposition | Reheating step | | decarburization |
| --- | --- | --- | --- | --- | --- | --- |
| | | | | temperature (°C) | time | |
| 9* | 2 | Aqueous mixture 1 | 30min at 100°C | 1250 | 3h | 0 |
| 10* | 2 | Aqueous mixture 1 | 30min at 100°C | 1250 | 6h | 0 |
| 11 | 2 | - | - | 1250 | 3h | 1 |
| 12* | 1 | Aqueous mixture 1 | 30min at 100°C | 1250 | 2h | 0 |
| 13* | 1 | Aqueous mixture 1 | 30min at 100°C | 1250 | 6h | 0 |
| 14* | 1 | Aqueous mixture 1 including DriCAT® | No curing | 1250 | 6h | 0 |
| 15* | 1 | Aqueous mixture 1 including DriCAT® | Room temperature | 1250 | 6h | 0 |
| 16 | 1 | - | - | 1250 | 2h | 1 |
| 17* | 1 | Aqueous mixture 1 | 30min at 100°C | 1250 | 3h | 0 |
| 18 | 1 | - | - | 1250 | 3h | 1 |
| *: according to the present invention. | | | | | | |

For Trials according to the present invention, a very low amount of carbon was removed at the trial surface.

On the contrary, for comparative Trials, a lot of decarburized areas were present allowing a change in the microstructure and therefore mechanical properties. Indeed, in the areas where there is a lot of carbon depletion, i.e. decarburized areas, ferrite is formed instead of pearlite.

Example 4: Microhardness test

In this case, after the reheating at 1250°C, some Trials were quenched in water to form martensite and the microhardness evolution from the hot steel product surface to a depth of 1500 $\mu$m was determined by microhardness measurements. Indeed, when martensite is formed, the carbon content of the martensite is directly proportional to the amount of carbon in the microstructure. Therefore, the higher the microhardness is, the higher the carbon content is. The results are in the following Table 4:

| Trials | Steel | Coating | Reheating step | | Microhardness (HV) | | | |
|---|---|---|---|---|---|---|---|---|
| | | | temperature (°C) | time | 100($\mu$m) | 500($\mu$m) | 1000($\mu$m) | 1500($\mu$m) |
| 12* | 1 | Aqueous mixture 1 | 1250 | 2h | 840 | 840 | 840 | 840 |
| 16 | 1 | - | 1250 | 2h | 280 | 420 | 600 | 700 |
| 17* | 1 | Aqueous mixture 1 | 1250 | 3h | 820 | 840 | 900 | 900 |
| 18 | 1 | - | 1250 | 3h | 380 | 640 | 820 | 900 |
| *: according to the present invention. | | | | | | | | |

The microhardness of Trials 12 and 17 clearly show that the decarburization was significantly reduced with the coated steel substrate according to the present invention compared to Trials 16 and 18.

**Claims**

1. A method for the manufacture of a coated steel substrate, comprising the successive following steps:

A. The provision of a steel substrate has the following compositions in weight percent:

$$0.31 \leq C \leq 1.2\%,$$

$$0.1 \leq Si \leq 1.7\%,$$

$$0.15 \leq Mn \leq 3.0\%,$$

$$P \leq 0.01\%,$$

$$S \leq 0.1\%,$$

$$Cr \leq 1.0\%,$$

$$Ni \leq 1.0\%,$$

$$Mo \leq 0.1\%,$$

and on a purely optional basis, one or more elements such as

$$Nb \leq 0.05\,\%,$$

$$B \leq 0.003\%,$$

$$Ti \leq 0.06\%,$$

$$Cu \leq 0.1\%,$$

$$Co \leq 0.1\%,$$

$$N \leq 0.01\%,$$

$$V \leq 0.05\%,$$

the remainder of the composition being made of iron and inevitable impurities resulting from the elaboration,

B. The coating deposition using an aqueous mixture comprising from 1 to 60g/L of nanographite flakes having a lateral size between 1 and 60$\mu$m and from 150 to 250g/L of a binder consisting of sodium silicate or a binder consisting of aluminum sulfate and an additive being alumina to form a coating having a thickness comprised between 10 and 250$\mu$m,

C. Optionally, the drying of the coated steel substrate obtained in step B).

2. A method according to claim 1, wherein in step B), the deposition of the coating is performed by spin coating, spray coating, dip coating or brush coating.

3. A method according to any one of claims 1 or 2, wherein in step B), wherein the aqueous mixture comprises nanographite comprising above 95% by weight of C.

4. A method according to claim 3, wherein in step B), wherein in step B), the aqueous mixture comprises nanographite comprising an amount of C equal or above to 99% by weight.

5. A method according to any one of claims 1 to 4, wherein in step B), the ratio in weight of nanographite with respect to binder is below or equal to 0.3.

6. A method according to any one of claims 1 to 5, wherein in step B), the aqueous mixture comprises an organometallic compound.

7. A method according to claim 6, wherein in step B), the concentration of the organometallic compound is equal or below to 0.12wt.%.

8. A method according to any one of claims 1 to 7, wherein in step C), when a drying is applied, the drying is performed at a temperature between 50 and 150°C or at room temperature.

9. A method according to any one of claims 1 to 8, wherein in step C), when a drying is applied, the drying step is performed with hot air.

10. A method according to any one of claims 1 to 9, wherein in step C), when a drying is applied, the drying is performed during 5 to 60minutes.

11. A method for manufacture of a hot rolled steel product comprising the following successive steps:

I. The provision of the coated steel substrate obtainable from the method according to any one of claims 1 to 10,
II. The reheating of the coated steel substrate in a reheating furnace at a temperature between 750 and 1300°C,
III. The descaling of the reheated coated steel sheet obtained in step II) and
IV. The hot-rolling of the descaled steel product.

12. A method according to claim 11, wherein in step II), the reheating is performed at a temperature between 750 and 900°C or between 900 and 1300°C.

13. A method according to claim 11 or 12, wherein in step III), the descaling is performed using water under pressure or the descaling is performed mechanically.

14. A method according to claim 13, wherein in step III), the water pressure is between 100 and 150 bars.

**Patentansprüche**

1. Verfahren zur Herstellung eines beschichteten Stahlsubstrats, umfassend die aufeinander folgenden Schritte:

A. die Bereitstellung eines Stahlsubstrats, das die folgenden chemischen Zusammensetzungen in Gewichtsprozent aufweist:

$$0{,}31 \leq C \leq 1{,}2\ \%,$$

$$0{,}1 \leq Si \leq 1{,}7\ \%,$$

$$0{,}15 \leq Mn \leq 3{,}0\ \%,$$

$$P \leq 0{,}01\ \%,$$

$$S \leq 0{,}1\ \%$$

$$Cr \leq 1{,}0\ \%,$$

$$Ni \leq 1{,}0\ \%,$$

$$Mo \leq 0{,}1\ \%,$$

und auf rein optionaler Basis eines oder mehrere Elemente, wie beispielsweise

$$Nb \leq 0{,}05\ \%,$$

$$B \leq 0{,}003\ \%,$$

$$Ti \leq 0{,}06\ \%,$$

$$Cu \leq 0{,}1\ \%,$$

$$Co \leq 0,1\ \%,$$

$$N \leq 0,01\ \%,$$

$$V \leq 0,05\ \%,$$

wobei der Rest der Zusammensetzung aus Eisen und unvermeidlichen Verunreinigungen besteht, die aus der Herstellung resultieren,

B. die Beschichtungsabscheidung unter Verwendung eines wässrigen Gemischs, umfassend 1 bis 60 g/l Nanographitflocken, die eine laterale Größe zwischen 1 und 60 $\mu$m aufweisen und 150 bis 250 g/l Bindemittel, bestehend aus Natriumsilikat oder bestehend aus Aluminiumsulfat und einen Zusatzstoff, der Aluminiumoxid ist, um eine Beschichtung zu bilden, die eine Stärke zwischen 10 und 250 $\mu$m aufweist,

C. optional das Trocknen des in Schritt B) erlangten beschichteten Stahlsubstrats.

2. Verfahren nach Anspruch 1, wobei in Schritt B) das Abscheiden der Beschichtung durch Schleuderbeschichten, Sprühbeschichten, Tauchbeschichten oder Bürstenbeschichten ausgeführt wird.

3. Verfahren nach einem der Ansprüche 1 oder 2, wobei in Schritt B) das wässrige Gemisch Nanographit umfasst, umfassend über 95 Gewichtsprozent C.

4. Verfahren nach Anspruch 3, wobei in Schritt B) das wässrige Gemisch Nanographit umfasst, umfassend eine Menge an C gleich wie oder mehr als 99 Gewichtsprozent.

5. Verfahren nach einem der Ansprüche 1 bis 4, wobei in Schritt B) das Gewichtsverhältnis von Nanographit zu Bindemittel kleiner als oder gleich wie 0,3 ist.

6. Verfahren nach einem der Ansprüche 1 bis 5, wobei in Schritt B) das wässrige Gemisch eine metallorganische Verbindung umfasst.

7. Verfahren nach Anspruch 6, wobei in Schritt B) die Konzentration der metallorganischen Verbindung gleich wie oder weniger als 0,12 Gewichtsprozent ist.

8. Verfahren nach einem der Ansprüche 1 bis 7, wobei in Schritt C), wenn ein Trocknen angewendet wird, das Trocknen bei einer Temperatur zwischen 50 und 150 °C oder bei Raumtemperatur ausgeführt wird.

9. Verfahren nach einem der Ansprüche 1 bis 8, wobei in Schritt C), wenn ein Trocknen angewendet wird, der Trocknungsschritt mit Heißluft ausgeführt wird.

10. Verfahren nach einem der Ansprüche 1 bis 9, wobei wenn ein Trocknen angewendet wird, in Schritt C) das Trocknen während 5 bis 60 Minuten ausgeführt wird.

11. Verfahren zur Herstellung eines warmgewalzten Stahlprodukts, umfassend die folgenden aufeinanderfolgenden Schritte:

I. Die Bereitstellung des beschichteten Stahlsubstrats, das aus dem Verfahren nach einem der Ansprüche 1 bis 10 erlangt werden kann,

II. Das Wiedererwärmen des beschichteten Stahlsubstrats in einem Wiedererwärmungsofen bei einer Temperatur zwischen 750 und 1300 °C,

III. das Entzundern des in Schritt II) erlangten wiedererwärmten beschichteten Stahlblechs und

IV. das Warmwalzen des entzunderten Stahlprodukts.

12. Verfahren nach Anspruch 11, wobei in Schritt II) die Wiedererwärmung bei einer Temperatur zwischen 750 und 900 °C oder zwischen 900 und 1300 °C ausgeführt wird.

13. Verfahren nach Anspruch 11 oder 12, wobei in Schritt III) das Entzundern unter Verwendung von Wasser unter Druck ausgeführt wird oder das Entzundern mechanisch ausgeführt wird.

**14.** Verfahren nach Anspruch 13, wobei in Schritt III) der Wasserdruck zwischen 100 und 150 bar ist.

**Revendications**

**1.** Procédé de fabrication d'un substrat en acier revêtu comprenant les étapes suivantes :

A. La fourniture d'un substrat en acier présente les compositions suivantes en pourcentage en poids :

$$0,31 \leq C \leq 1,2\ \%,$$

$$0,1 \leq Si \leq 1,7\ \%,$$

$$0,15 \leq Mn \leq 3,0\ \%,$$

$$P \leq 0,01\ \%,$$

$$S \leq 0,1\ \%$$

$$Cr \leq 1,0\ \%,$$

$$Ni \leq 1,0\ \%,$$

$$Mo \leq 0,1\ \%,$$

et, à titre purement facultatif, un ou plusieurs éléments tels que

$$Nb \leq 0,05\ \%,$$

$$B \leq 0,003\ \%,$$

$$Ti \leq 0,06\ \%,$$

$$Cu \leq 0,1\ \%,$$

$$Co \leq 0,1\ \%,$$

$$N \leq 0,01\ \%,$$

$$V \leq 0,05\ \%,$$

le reste de la composition étant constitué de fer et d'impuretés inévitables résultant de l'élaboration,

B. Le dépôt de revêtement utilisant un mélange aqueux comprenant de 1 à 60 g/L de paillettes de nanographite présentant une taille latérale comprise entre 1 et 60 $\mu$m et de 150 à 250 g/L de liant, constitué de silicate de sodium ou un liant constitué de sulfate d'aluminium et un additif étant de l'alumine, pour former un revêtement présentant une épaisseur comprise entre 10 et 250 $\mu$m,

C. Éventuellement, le séchage du substrat en acier revêtu obtenu à l'étape B).

2. Procédé selon la revendication 1, dans lequel, à l'étape B), le dépôt du revêtement est effectué par revêtement par centrifugation, revêtement par pulvérisation, revêtement par trempage ou revêtement à la brosse.

3. Procédé selon la revendication 1 ou 2, dans lequel à l'étape B), le mélange aqueux comprend du nanographite comprenant plus de 95 % en poids de C.

4. Procédé selon la revendication 3, dans lequel à l'étape B), le mélange aqueux comprend du nanographite comprenant une quantité de C égale ou supérieure à 99 % en poids.

5. Procédé selon l'une quelconque des revendications 1 à 4, dans lequel à l'étape B), le rapport en poids du nanographite par rapport au liant est inférieur ou égal à 0,3.

6. Procédé selon l'une quelconque des revendications 1 à 5, dans lequel à l'étape B), le mélange aqueux comprend un composé organométallique.

7. Procédé selon la revendication 6, dans lequel à l'étape B), la concentration du composé organométallique est égale ou inférieure à 0,12 % en poids.

8. Procédé selon l'une quelconque des revendications 1 à 7, dans lequel à l'étape C), lorsqu'un séchage est appliqué, le séchage est réalisé à une température comprise entre 50 et 150 °C ou à température ambiante.

9. Procédé selon l'une quelconque des revendications 1 à 8, dans lequel à l'étape C), lorsqu'un séchage est appliqué, l'étape de séchage est réalisée avec de l'air chaud.

10. Procédé selon l'une quelconque des revendications 1 à 9, dans lequel à l'étape C), lorsqu'un séchage est appliqué, le séchage est réalisé pendant 5 à 60 minutes.

11. Procédé de fabrication d'un produit en acier laminé à chaud comprenant les étapes successives suivantes :

I. La fourniture du substrat d'acier revêtu pouvant être obtenu à partir du procédé selon l'une quelconque des revendications 1 à 10,

II. Le réchauffage du substrat en acier revêtu dans un four de réchauffage à une température comprise entre 750 et 1300 °C,

III. Le détartrage de la tôle d'acier revêtue réchauffée obtenue à l'étape II) et

IV. Le laminage à chaud du produit en acier détartré.

12. Procédé selon la revendication 11, dans lequel à l'étape II), le réchauffage est effectué à une température comprise entre 750 et 900 °C ou entre 900 et 1300 °C.

13. Procédé selon la revendication 11 ou 12, dans lequel à l'étape III), le décalaminage est effectué en utilisant de l'eau sous pression ou le décalaminage est effectué mécaniquement.

14. Procédé selon la revendication 13, dans lequel, à l'étape III), la pression d'eau est comprise entre 100 et 150 bars.

3

2

**Figure 1**

4

1

5

**Figure 2**

z

Width

y

Lateral size

x

Thickness

**REFERENCES CITED IN THE DESCRIPTION**

**Patent documents cited in the description**

- CN 101696328
- EP 1932933 A
- JP 2001073033 B
- JP 2000319758 B